(19) Europäisches Patentamt / European Patent Office / Office européen des brevets

(11) EP 1 868 176 A1

(12) **EUROPEAN PATENT APPLICATION**
published in accordance with Art. 158(3) EPC

(43) Date of publication:
**19.12.2007 Bulletin 2007/51**

(21) Application number: **06731727.1**

(22) Date of filing: **06.04.2006**

(51) Int Cl.:
***G09F 9/00*** *(2006.01)* ***G02F 1/1333*** *(2006.01)*
***G02F 1/1335*** *(2006.01)* ***H01J 11/02*** *(2006.01)*

(86) International application number:
**PCT/JP2006/307791**

(87) International publication number:
**WO 2006/109841 (19.10.2006 Gazette 2006/42)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.04.2005 JP 2005111414**

(71) Applicant: **NITTO DENKO CORPORATION**
**Ibaraki-shi,**
**Osaka 567-8680 (JP)**

(72) Inventors:
- **NAKAGAWA, Yoshio, c/o NITTO DENKO CORPORATION Ibaraki-shi, Osaka 5678680 (JP)**
- **HIGUCHI, Naoaki, c/o NITTO DENKO CORPORATION Ibaraki-shi, Osaka 5678680 (JP)**
- **SANO, Kenji, c/o NITTO DENKO CORPORATION Ibaraki-shi, Osaka 5678680 (JP)**
- **NAGAMI, Hiroshi, c/o NITTO DENKO CORPORATION Ibaraki-shi, Osaka 5678680 (JP)**
- **BUZOJIMA, Yasushi, c/o NITTO DENKO CORPORATION Ibaraki-shi, Osaka 5678680 (JP)**
- **SUZUKI, Tatsuya, c/o NITTO DENKO CORPORATION Ibaraki-shi, Osaka 5678680 (JP)**
- **KUME, Katsuya, c/o NITTO DENKO CORPORATION Ibaraki-shi, Osaka 5678680 (JP)**
- **BANBA, Tomohide, c/o NITTO DENKO CORPORATION Ibaraki-shi, Osaka 5678680 (JP)**
- **KAI, Makoto, c/o NITTO DENKO CORPORATION Ibaraki-shi, Osaka 5678680 (JP)**

(74) Representative: **Duckworth, Timothy John**
**J.A. Kemp & Co.**
**14 South Square**
**Gray's Inn**
**GB-London WC1R 5JJ (GB)**

# (54) IMPACT ABSORPTION SHEET FOR FLAT PANEL DISPLAY, PROCESS FOR PRODUCING THE SAME, AND FLAT PANEL DISPLAY

(57) The present invention provides an impact absorption sheet for flat panel display with a polyoxyalkylene-series polymer as the main component, preferably, an impact absorption sheet for flat panel display made of a cured product obtained by curing a composition containing (A) polyoxyalkylene-series polymer having at least one alkenyl group in each molecule, (B) compound having an average of 2 or more hydrosilyl groups in each molecule, and (C) hydrosilylation catalyst.

According to the present invention, an impact absorption sheet for flat panel display can be obtained, which can meet the size reduction and weight reduction of flat panel display, and which affords practically sufficient impact absorbability even in an area of thin film where practically sufficient impact absorbability has not been conventionally achieved. According to the present invention, moreover, an impact absorption sheet for flat panel display can be obtained, which not only has superior impact absorbability but is also superior in easy adhesion to flat panel display and redetachability after adhesion.

EP 1 868 176 A1

## Description

## Technical Field

The present invention relates to an impact absorption sheet for flat panel display, a method of producing the same, and a flat panel display, more specifically to an impact absorption sheet for flat panel display using a polyoxyalkylene-series polymer, a method of producing the same, and a flat panel display equipped with the impact absorption sheet.

## Background Art

In recent years, there has been an increasing demand for thickness reduction and weight reduction of flat panel display. To meet this demand, various technologies have been developed wherein an impact absorption functional layer is provided directly on a display panel using an impact absorption (crack-preventive) sheet without using a protective plate. As the situation stands, however, it remains unclear as to what kind and which level of characteristics of an impact absorption sheet is superior in the practical applicability as an impact absorption functional layer for the thickness reduction and weight reduction.

For example, the present applicant previously proposed a plasma display apparatus directly equipped with a transparent protective plate via a heat-resistant transparent sheet having buffering quality and adhesiveness on the visual side of the plasma display panel (JP-A-9-259770). According to this display apparatus, an excellent effect of avoiding the problem of image ghosting is obtained because there is conventionally no air layer on the visual side as described above. However, in the above-described proposal, a hard thick glass plate or acrylic plate is used as the transparent protective plate; therefore, the work to equip this plate to the plasma display plate via the transparent sheet is not easy, and when a glass plate is used, problems remain in terms of weight and cost. The display apparatus cannot be said to have satisfactory impact resistance; its impact resistance is at most such that the impact force exerted by a steel ball weighing 3 g, dropped from a height of 1 m (about 0.0294 J), is endured. Furthermore, there has been another problem that in disposing of the display apparatus, it is difficult to detach and remove the transparent protective plate and the like for recycling.

On the other hand, described in JP-A-11-217550 is a self-adhesive film consisting of a highly transparent organic film and an adhesive layer, having both anti-scattering function and anti-reflection function. Therein, it is described that as the organic film, polyesters such as polyethylene terephthalate (PET) and polybutylene terephthalate (PBT), polymethyl methacrylate (PMMA), acrylics, polycarbonate (PC), polystyrene, triacetate, polyvinyl alcohol, polyvinyl chloride, polyvinylidene chloride, polyethylene, ethylene-vinyl acetate copolymer, polyurethane, cellophane and the like can be mentioned (PET, PC, and PMMA films are described as preferable), and that the thickness of the organic film is determined as appropriate according to characteristics required for the intended use of the self-adhesive film obtained (for example, strength, film thinness) and the like, and normally selected from the range of 1 $\mu$m to 10 mm. However, when such a self-adhesive film is used as an impact absorption sheet for flat panel display, it is necessary to increase the thickness for obtaining practically satisfactory shock absorption performance, so that the thickness of the flat panel display cannot be reduced.

Proposed in JP-A-2002-260539 is one using an adhesive as the impact absorption sheet. Therein, it is described that as the adhesive, rubber pressure sensitive adhesive such as natural rubber, styrene-butadiene rubber, neoprene, and butyl rubber; polymer adhesives such as polyacrylic acid alkyl esters; room temperature curing and heat curing various silicone resins and the like can be mentioned; in particular, acrylic adhesive, which have good weather resistance and transparency, are described as being preferable; and it is also described that relatively soft acrylic adhesive having a low glass transition temperature (not more than 10°C) are preferable, and that any ionomer resin comprising a (meth) acrylic acid ester copolymer crosslinked with a metal ion can be used by normotemperature adhesion while maintaining its transparency. However, in the case of such an acrylic adhesive to be used with a solvent, there is a problem of uneasy control of sheet thickness, particularly of difficulty in increasing the thickness because a sheet-like member is formed via a coating step and a drying step. On the other hand, in the case of adhesive based on reactive resins such as thermally curing resins and UV curing resins, there is a problem of difficulty in obtaining thickness precision. It is also described that from the viewpoint of impact resistance, the thickness of the adhesive layer is preferably 0.1 to 2.0 mm (more preferably 0.5 to 2.0 mm), and that by having a setting in this range, both excellent impact resistance and adhesiveness can be achieved; however, when the adhesive is used as an impact absorption sheet for flat panel display, it is necessary to increase the thickness of the impact absorption layer for obtaining practically satisfactory shock absorption performance, so that the thickness of the flat panel display cannot be reduced.

Proposed in JP-A-2001-266759 is the formation of a lamination of two distinct transparent layers of different shear elastic moduluses on the glass panel substrate of a flat panel display via a transparent adhesive layer, that is, an impact modifying lamination having a adhesive layer, a high shear elastic modulus B anti-cracking layer, and a high

shear elastic modulus A anti-scattering layer formed in this order. Therein, as the high shear elastic modulus A anti-scattering layer, a single film selected from among plastic films having a visible light transmittance of not less than 70%, and excellent transparency, mechanical strength and heat resistance, for example, films of polyesters such as polyethylene naphthalate (PEN) and polyethylene terephthalate (PET), (meth)acrylic resin, polycarbonate (PC), triacetylcellulose (TAC) resin, ARTON resin, epoxy resin, polyimide resin, polyetherimide resin, polyamide resin, polysulfone, polyphenylene sulfide, polyether sulfone and the like, or a laminate film comprising 2 or more of these films, and the like can be mentioned; as the high shear elastic modulus B anti-cracking layer, a single layer consisting of an ionomer resins prepared by crosslinking molecules of ethylene-methacrylate copolymer with a metal ion ($Na^+$, $Zn^{2+}$ and the like), a thermoplastic resin such as EVA (ethylene-vinyl acetate copolymer), PVC (polyvinyl chloride), EEA (ethylene-ethyl acrylate copolymer), PE (polyethylene), PP (polypropylene), polyamide, polybutyral, or polystyrene; various thermoplastic elastomers exhibiting rubber elasticity, such as polystyrene series, polyolefin series, polydiene series, vinyl chloride series, polyurethane series, polyester series, polyamide series, fluorine series, chlorinated polyethylene series, polynorbornene series, polystyrene-polyolefin copolymer series, (hydrogenated) polystyrene-butadiene copolymer series, and polystyrene-vinylpolyisoprene copolymer series; a blend of a polyolefin such as polyethylene or polypropylene with a thermoplastic elastomer; and the like; a multi-layer (lamination) such as a multi-layer (lamination) of polyolefin (polypropylene (PP) or polyethylene (PE) and the like)/thermoplastic resin (for example, EVA)/polyolefin, polyolefin (PP or PE) + thermoplastic elastomer/polyolefin (PP or PE), PP/PE/PP, and a multi-layer (lamination) of a conjugate system of polyolefin + thermoplastic elastomer blended at various ratios, and the like can be mentioned; as the adhesive layer, acrylic-series, rubber-series, polyester-series and the like can be mentioned, and it is described that a highly transparent acrylic-series adhesive is particularly preferably used.

It is described that as the above-described acrylic-series adhesive, a polymer having a glass transition temperature (Tg) of not more than 60°C, obtained by polymerizing 1 kind or 2 kinds or more of (meth)acrylic acid alkyl ester as the main component monomer mainly for conferring adequate wettability and softness to the adhesive, using a functional group-containing monomer and another copolymerizable monomer as required, with the use of an appropriate polymerization catalyst, by a method such as solution polymerization, emulsification polymerization, block polymerization (particularly ultraviolet irradiation polymerization), or suspension polymerization, is preferable, that such an acrylic-series polymer appropriately supplemented with various commonly known additives is also used, and that the adhesive may be of the thermal crosslinking type, the light (ultraviolet, electron beam) crosslinking type and the like.

However, when such an impact modifying lamination is used as an impact absorption sheet for a flat panel display, it is necessary to increase the thickness of the impact absorption layer (high shear elastic modulus B anti-cracking layer/high shear elastic modulus A anti-scattering layer) for obtaining a practically satisfactory shock absorption performance, so that the thickness of the flat panel display cannot be reduced.

On the other hand, as the adhesive composition, a polyoxyalkylene-series polymer having at least one alkenyl group in each molecule, a compound comprising an average of 2 or more hydrosilyl groups in each molecule, and one comprising a hydrosilylation catalyst are known (JP-A-2003-292926). Described in the Japanese Patent Kokai Publication No. 2003-292926 is that the adhesive composition can be used in "an anti-glass-scattering film"; "an anti-glass-scattering film" refers to a film having the function to retain glass broken by some shock with a adhesive to prevent the broken glass from scattering, and is not intended for the foregoing impact absorption sheet for flat panel display, that is, a sheet used to prevent the glass substrate from being broken by shock.

The present invention has been developed in view of the above-described circumstances, and it is an object thereof to provide an impact absorption sheet for flat panel display that meets the demand for flat panel display thickness reduction and weight reduction, and that achieves sufficient impact resistance (shock absorption quality) even for thin panels, for which practically sufficient impact resistance (shock absorption quality) has not conventionally been realized, and a method of producing the same.

Another object of the present invention is to provide an impact absorption sheet for flat panel display that meets the demand for flat panel display thickness reduction and weight reduction, and that permits easy control of the thickness thereof and in addition has excellent detachability allowing easy removal from the adherend surface, while having a favorable property of excellent impact resistance (shock absorption quality), and a method of producing the same.

It is still another object of the present invention to provide a method of absorbing shock on a flat panel display, meeting the demand for flat panel display thickness reduction and weight reduction.

It is still yet another object of the present invention to provide a thin flat panel display having an excellent impact resistance such that the glass plate incorporated in the display is unlikely to be broken.

## Disclosure of the Invention

The present inventors diligently investigated to solve the above-described problems and, as a result, found that a sheet with a polyoxyalkylene-series polymer as the main component could be an impact absorption sheet that meets the demand for flat panel display thickness reduction and weight reduction, and that a sheet obtained by thermally

curing a composition comprising both a polyoxyalkylene-series polymer having an alkenyl group and a compound comprising a hydrosilyl group permitted easy control of the thickness of the sheet, and had detachability allowing easy removal, and developed the present invention.

Accordingly, the present invention relates to:

(1) an impact absorption sheet for flat panel display comprising a polyoxyalkylene-series polymer as the main component,
(2) the impact absorption sheet for flat panel display described in (1) above, consisting of a cured product obtained by curing a composition comprising the following components A to C:

A: polyoxyalkylene-series polymer having at least one alkenyl group in each molecule
B: compound having an average of 2 or more hydrosilyl groups in each molecule
C: hydrosilylation catalyst

(3) the impact absorption sheet for flat panel display described in (1) or (2) above, wherein the sheet has a glass transition temperature of -80°C to -50°C,
(4) an impact absorption sheet for flat panel display comprising a polyoxyalkylene-series polymer as the main component, having an impact resistance such that when a test member prepared by laminating the impact absorption sheet on a transparent glass plate 2.8 mm in thickness and 30 mm x 30 mm in plane size is placed on a stainless steel plate with the transparent glass plate side facing the stainless steel plate, and a steel ball 50 mm in diameter and 510 g in weight is freely dropped from a height of 50 mm vertically apart from the impact absorption sheet, the transparent glass plate is not broken,
(5) an impact absorption sheet for flat panel display comprising a polyoxyalkylene-series polymer as the main component, wherein the shear loss compliance (J") expressed by the following equation is not less than $2.5 \times 10^{-7}$ ($Pa^{-1}$):

$$J'' = G'' / (G'^2 + G''^2)$$

(wherein G' indicates storage elastic modulus, and G" indicates loss elastic modulus),
(6) the impact absorption sheet for flat panel display described in any of (1) to (5) above, wherein the thickness precision of the sheet in the width direction of the sheet is not more than ±5% at a sheet thickness of not less than 70 μm,
(7) a use of a polyoxyalkylene-series polymer for producing an impact absorption sheet for flat panel display,
(8) a method of absorbing impact on a flat panel display using a polyoxyalkylene-series polymer,
(9) a method of producing an impact absorption sheet for flat panel display, comprising a step for stirring and hence defoaming a fluid comprising a polyoxyalkylene-series polymer under vacuum conditions, then coating the product, and thermally curing the coated film of the defoamed fluidized product to obtain a sheet,
(10) a method of producing an impact absorption sheet for flat panel display, comprising stirring and hence defoaming a fluid comprising the following components A to C under vacuum conditions, then coating the product, and thermally curing the coated film of the defoamed fluid to obtain a sheet:

A: polyoxyalkylene-series polymer having at least one alkenyl group in each molecule
B: compound having an average of two or more hydrosilyl groups in each molecule
C: hydrosilylation catalyst, and

(11) a flat panel display equipped with the impact absorption sheet described in any of (1) to (6) above.
The present invention also relates to:
(12) the impact absorption sheet for flat panel display described in any of (1) to (6) above, wherein a support treated with a cation polymerizable UV curing silicon mold release treatment agent containing a boron photo initiator is laminated on one face of the sheet,
(13) the impact absorption sheet for flat panel display described in any of (1) to (6) and (12) above, wherein a protection film treated with a cation polymerizable UV curing silicone-series mold releasing agent comprising a boron-based photoinitiator laminated on the other face of the sheet, and
(14) the impact absorption sheet for flat panel display described in (13) above, wherein the cation polymerizable UV curing silicone mold release treatment agent comprises a cation polymerizable silicone, a boron photoinitiator and MQ resin.

## Brief Description of the Drawings

Figure 1 is a conceptual illustration showing the entire shock absorption quality test apparatus.
Figure 2 is a plane view schematically showing the pattern formation plane of a stainless steel substrate.

In Figure 1, 1 indicates an impact absorption sheet, 2 indicates a transparent glass plate, 3 indicates a stainless steel plate, 4 indicates a steel ball, 5 indicates an electromagnet, and 10 indicates a test piece.

## Best Mode for Embodying the Invention

The present invention is hereinafter described in more detail.

The impact absorption sheet for flat panel display of the present invention (hereinafter also simply referred to as "the impact absorption sheet") has a polyoxyalkylene-series polymer as the main component.

By using a polyoxyalkylene-series polymer as the main component, the impact absorption sheet exhibits better shock absorption performance at a thinner thickness, compared to the same kind of conventional sheet described in the foregoing Background Art section, and even when the thickness thereof is not more than 450 $\mu$m, preferably not more than 400 $\mu$m, more preferably not more than 300 $\mu$m, practically excellent shock absorption performance is obtained. The polyoxyalkylene-series polymer is not subject to limitation, as long as it can be prepared as a sheet, and permits maintenance of the sheet shape.

The impact absorption sheet for flat panel display of the present invention with a polyoxyalkylene-series polymer as the main component is preferably configured with a cure product prepared by curing a composition comprising the following A to C:

A: polyoxyalkylene-series polymer having at least one alkenyl group in each molecule
B: compound comprising an average of two or more hydrosilyl groups in each molecule
C: hydrosilylation catalyst

In the present invention, the component A polyoxyalkylene-series polymer having at least one alkenyl group in each molecule is not subject to limitation, and various types can be used; in particular, one wherein the main chain of the polymer has a repeat unit represented by the general formula (1) shown below is suitable.

General formula (1): $-R^1-O-$

(wherein $R^1$ is an alkylene group)

$R^1$ is preferably a linear or branched alkylene group having 1 to 14, more preferably 2 to 4, carbon atoms.

As specific examples of the repeat unit represented by the general formula (1), $-CH_2O-$, $-CH_2CH_2O-$, $-CH_2CH(CH_3)O-$, $-CH_2CH(C_2H_5)O-$, $-CH_2C(CH_3)_2O-$, $-CH_2CH_2CH_2CH_2O-$ and the like can be mentioned. The main chain skeleton of the polyoxyalkylene-series polymer may consist of only one kind of repeat unit, and may consist of two kinds or more of repeat units. Particularly, with regard to availability and workability, a polymer with $-CH_2CH(CH_3)O-$ as the main repeat unit is preferable. In the main chain of the polymer, a repeat unit other than the oxyalkylene group may be contained. In this case, the total sum of oxyalkylene units in the polymer is preferably not less than 80% by weight, particularly preferably not less than 90% by weight.

Although the component A polymer may be a linear polymer or a branched polymer, or a mixture thereof, it is preferable, for obtaining good adhesiveness, that the component A polymer contain a linear polymer at not less than 50% by weight.

The molecular weight of the component A polymer is preferably 500 to 50,000, more preferably 5,000 to 30,000, in terms of number-average molecular weight. If the number-average molecular weight is less than 500, the curing product obtained tends to be too brittle; conversely, if the number-average molecular weight exceeds 50,000, the curing product obtained tends to be so viscous that the workability is considerably reduced; therefore, these cases are undesirable. As mentioned herein, number-average molecular weight refers to a value obtained by the gel permeation chromatography (GPC) method.

The component A polymer preferably has a narrow molecular weight distribution wherein the ratio of weight-average molecular weight and number-average molecular weight (Mw/Mn) is not more than 1.6; a polymer having an Mw/Mn of not more than 1.6 produces a decreased viscosity of the composition and offers improved workability. Hence, the Mw/Mn is more preferably not more than 1.5, still more preferably not more than 1.4. As mentioned herein, Mw/Mn refers to a value obtained by the gel permeation chromatography (GPC) method.

Here, measurements of molecular weight by the GPC method were performed using a GPC apparatus manufactured by Tosoh Corporation (HLC-8120GPC), and weight-average molecular weights were calculated on a polystyrene basis. The measuring conditions are as follows:

Sample concentration: 0.2% by weight (THF solution)
Sample injection volume: 10 μl
Eluent: THF
Flow rate: 0.6 ml/min
Measuring temperature: 40°C
Column: sample column TSKgel GMH-H(S)
Detector: differential refractometer

With regard to the component A polymer (polyoxyalkylene-series polymer having at least one alkenyl group in each molecule), the alkenyl group is not subject to limitation, but an alkenyl group represented by the general formula (2) shown below is suitable.

General formula (2) : $H_2C=C(R^2)$

(wherein $R^2$ is hydrogen or a methyl group)

The mode of binding of the alkenyl group to the polyoxyalkylene-series polymer is not subject to limitation; for example, alkenyl group direct bond, ether bond, ester bond, carbonate bond, urethane bond, urea bond and the like can be mentioned.

As specific examples of the component A polymer, a polymer represented by the general formula (3): $\{H_2C=C(R^{3a})-R^{4a}-O\}a_1R^{5a}$
(wherein $R^{3a}$ is hydrogen or a methyl group; $R^{4a}$ is a divalent hydrocarbon group having 1 to 20 carbon atoms, optionally having one or more ether groups, $R^{5a}$ is a polyoxyalkylene-series polymer residue; $a_1$ is a positive integer.) can be mentioned. As $R^{4a}$ in the formula, specifically, $-CH_2-$, $-CH_2CH_2-$, $-CH_2CH_2CH_2-$, $-CH_2CH(CH_3)CH_2-$, $-CH_2CH_2CH_2CH_2-$, $-CH_2CH_2OCH_2CH_2-$, or $-CH_2CH_2OCH_2CH_2CH_2-$ and the like can be mentioned; for the ease of synthesis, $-CH_2-$ is preferable.

A polymer having an ester bond, represented by the general formula (4): $\{H_2C=C(R^{3b})-R^{4b}-OCO\}a_2R^{5b}$
(wherein $R^{3b}$, $R^{4b}$, $R^{5b}$ and $a_2$ have the same definitions as those of $R^{3a}$, $R^{4a}$, $R^{5a}$, and $a_1$, respectively)
can also be mentioned.

A polymer represented by the general formula (5): $\{H_2C=C(R^{3c})\}a_3R^{5c}$
(wherein $R^{3c}$, $R^{5c}$ and $a_3$ have the same definitions as those of $R^{3a}$, $R^{5a}$, and $a_1$, respectively) can also be mentioned.

Furthermore, a polymer having a carbonate bond, represented by the general formula (6): $\{H_2C=C(R^{3d})-R^{4d}-O(CO)O\}a_4R^{5d}$ (wherein, $R^{3d}$, $R^{4d}$, $R^{5d}$ and $a_4$ have the same definitions as those of $R^{3a}$, $R^{4a}$, $R^{5a}$ and $a_1$, respectively) can also be mentioned.

It is preferable that at least 1, preferably 1 to 5, more preferably 1.5 to 3, alkenyl groups be present in each molecule of the component A polymer. If the number of alkenyl groups contained in each molecule of the component A polymer is less than 1, the curing is insufficient; if the number exceeds 5, the mesh structure becomes so dense that the polymer sometimes fails to exhibit a good adherence.

The component A polymer can be synthesized according to the method described in Japanese Patent Kokai Publication No. 2003-292926, and any commercially available product can be used as is.

In the present invention, any component B compound comprising an average of two or more hydrosilyl groups in each molecule can be used without limitation, as long as it has a hydrosilyl group (a group having an Si-H bond), but from the viewpoint of the ease of obtainment of raw materials and compatibility with the component A, an organohydrogen polysiloxane modified with an organic constituent is particularly preferable. The polyorganohydrogen siloxane modified with an organic constituent more preferably has an average of two to eight hydrosilyl groups in each molecule. Specific examples of the structure of the polyorganohydrogen siloxane include linear or cyclic ones represented by, for example:

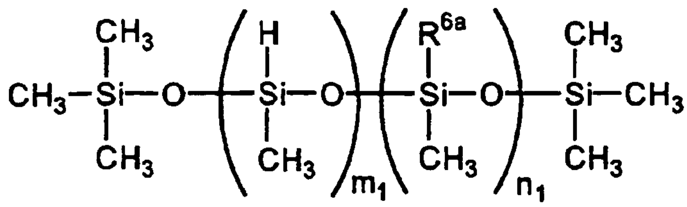

(wherein $2 \leq m_1 + n_1 \leq 50$, $2 \leq m_1$, and $0 \leq n_1$. $R^{6a}$ is a hydrocarbon group having 2 to 20 carbon atoms in the main chain thereof, optionally comprising one or more phenyl groups),

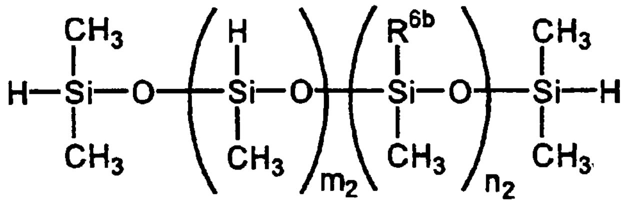

(wherein $0 \leq m_2 + n_2 \leq 50$, $0 \leq m_2$, and $0 \leq n_2$. $R^{6b}$ is a hydrocarbon group having 2 to 20 carbon atoms in the main chain thereof, optionally comprising one or more phenyl groups), or,

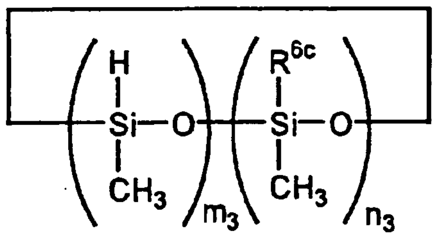

(wherein $3 \leq m_3 + n_3 \leq 20$, $2 \leq m_3 \leq 19$, and $0 \leq n_3 < 18$. $R^{6c}$ is a hydrocarbon group having 2 to 20 carbon atoms in the main chain thereof, optionally having one or more phenyl groups) and the like, and ones having two or more of these units, represented by the following:

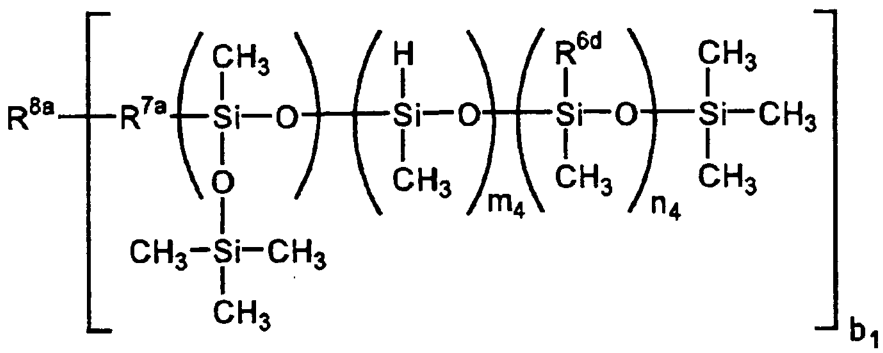

(wherein $1 \leq m_4 + n_4 \leq 50$, $1 \leq m_4$, and $0 \leq n_4$. $R^{6d}$ is a hydrocarbon group having 2 to 20 carbon atoms in the main chain thereof, optionally having one or more phenyl groups. $2 \leq b_1$. $R^{8a}$ is a divalent to tetravalent organic group, and $R^{7a}$ is a divalent organic group, but $R^{7a}$ may be absent depending on the structure of $R^{8a}$),

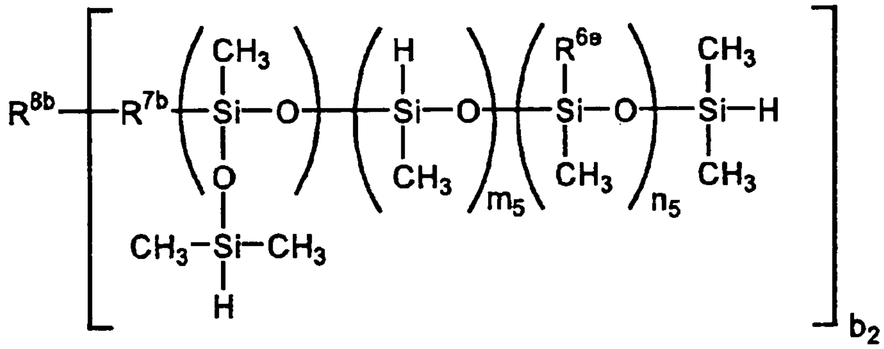

(wherein $0 \leq m_5+n_5 \leq 50$, $0 \leq m_5$, and $0 \leq n_5$. $R_{6e}$ is a hydrocarbon group having 2 to 20 carbon atoms in the main chain thereof, optionally having one or more phenyl groups. $2 \leq b_2$. $R^{8b}$ is a divalent to tetravalent organic group, and $R^{7b}$ is a divalent organic group. However, $R^{7b}$ may be absent depending on the structure of $R^{8b}$.), or

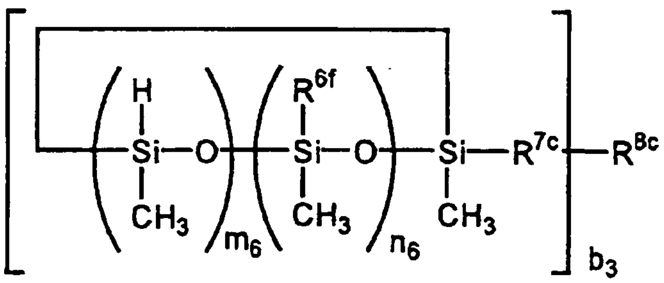

(wherein $3 \leq m_6+n_6 \leq 50$, $1 \leq m_6$, and $0 \leq n_6$. $R^{6f}$ is a hydrocarbon group having 2 to 20 carbon atoms in the main chain thereof, optionally comprising one or more phenyl groups. $2 \leq b_3$. $R^{8c}$ is a divalent to tetravalent organic group, and $R^{7c}$ is a divalent organic group. However, $R^{7c}$ may be absent depending on the structure of $R^{8c}$.) and the like.

The component B preferably has good compatibility with the component A and the component C, or good dispersion stability in the system. Particularly, if the viscosity of the entire system is low, use of an ingredient whose compatibility with any of the above-described ingredients is low as the component B sometimes causes phase separation and a curing failure.

As a specific example of the component B having relatively good compatibility with the component A and the component C, or relatively good dispersion stability, the following can be mentioned.

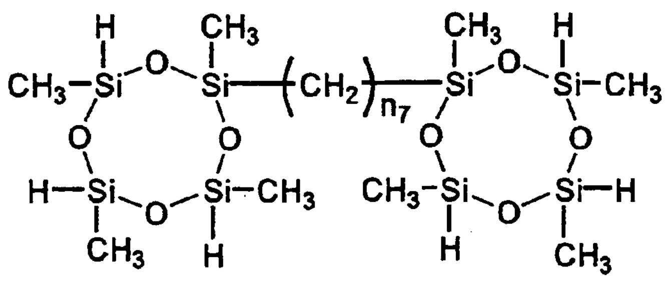

(wherein $n_7$ is an integer of not less than 4 and not more than 10,)

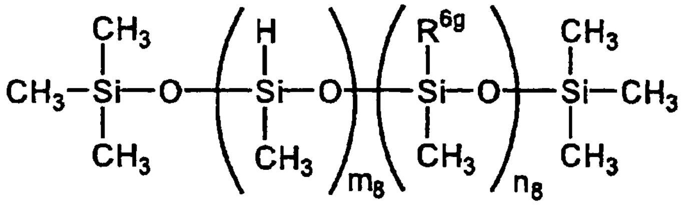

(wherein $2 \le m_8 \le 10$ and $0 \le n_8 \le 5$, $R^{6g}$ is a hydrocarbon group having eight or more carbon atoms.)

As specific preferable examples of the component B, polymethylhydrogen siloxane can be mentioned; for assuring compatibility with the component A and adjusting the SiH content, a compound modified with a-olefin, styrene, a-methylstyrene, allylalkyl ether, allylalkyl ester, allylphenyl ether, allylphenyl ester or the like can be mentioned; as an example, the following structure can be mentioned.

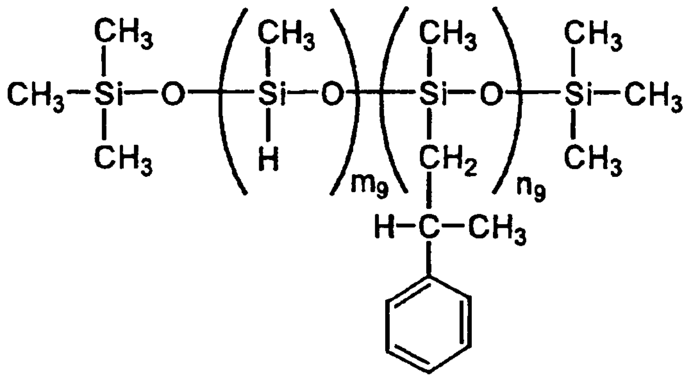

(wherein $2 \le m_9 \le 20$ and $1 \le n_9 \le 20$.)

The component B can be synthesized by a commonly known method, and any commercially available product can be used as is.

In the present invention, the component C hydrosilylation catalyst is not subject to limitation; an optionally chosen one can be used. As specific examples, chloroplatinic acid; simple substance platinum; solid platinum carried by a carrier such as alumina, silica, or carbon black; a platinum-vinylsiloxane complex {for example, $Pt_n(ViMe_2SiOSiMe_2Vi)_m$, $Pt[(MeViSiO)_4]_m$ and the like}; a platinum-phosphine complex {for example, $Pt(PPh_3)_4$, $Pt(PBu_3)_4$ and the like}; a platinum-phosphite complex {for example, $Pt[P(OPh)_3]_4$, $Pt[P(OBu)_3]_4$ and the like}; $Pt(acac)_2$; the platinum-hydrocarbon conjugates described in US Patent 3159601 and 3159662 of Ashby et al.; the platinum alcoholate catalyst described in US Patent 3220972 of Lamoreaux et al. and the like can be mentioned. (In the formulas above, Me represents a methyl group, Bu represents a butyl group, Vi represents a vinyl group, Ph represents a phenyl group, acac represents an acetylacetonate, and each of n and m represents an integer.)

As examples of catalysts other than platinum compounds, $RhCl(PPh_3)_3$, $RhCl_3$, $Rh/Al_2O_3$, $RuCl_3$, $IrCl_3$, $FeCl_3$, $AlCl_3$, $PdCl_2.2H_2O$, $NiCl_2$, $TiCl_4$ and the like can be mentioned.

These catalysts may be used alone, and may be used in combination of 2 kinds or more. With regard to catalyst activity, chloroplatinic acid, a platinum-phosphine complex, a platinum-vinylsiloxane complex, $Pt(acac)_2$ and the like are preferable.

Although the amount of the component C formulated is not subject to limitation, from the viewpoint of assurance of composition potlife and sheet transparency, the amount is generally not more than $1x10^{-1}$ mol, preferably not more than $5.3x10^{-2}$ mol, relative to 1 mol of alkenyl groups in the component A; particularly, from the viewpoint of sheet transparency, the amount is more preferably not more than $3.5x10^{-2}$ mol, particularly preferably not more than $1.4x10^{-3}$ mol. If the amount exceeds $1x10^{-1}$ mol relative to 1 mol of alkenyl groups in the component A, the finished impact absorption sheet is likely to undergo yellowing and the transparency of the sheet tends to be damaged. If the amount of the component C formulated is too low, the composition curing speed is slow, and the curing quality tends to be unstable; therefore, the amount is preferably not less than $8.9x10^{-5}$ mol, more preferably not less than $1.8x10^{-4}$ mol.

A composition comprising the above-described components A to C is characterized by the ability to exhibit its tacky characteristic (function to adhere to another object) even without the addition, or with the addition of a small amount, of an adhesiveness-imparting resin. Furthermore, the sheet obtained with the composition not only has adhesiveness,

but also redetachability that permits easy removal from a glass substrate after being once adhered to the glass substrate and the like. Although the detailed mechanism of the adhesiveness of the composition per se remains unknown, it is postulated that the appropriate crosslinking density of the cured product obtained by the present invention and the presence of molecules freely moving without crosslinking of a portion of the molecular chain thereof are effective for the expression of the adhesiveness and the redetachability. For this reason, in the composition, it is preferable that the hydrosilyl groups of the component B (compound B) be contained (formulated) so that the functional group ratio to the alkenyl groups of the component A (compound A) will be not less than 0.3 and less than 2, more preferably not less than 0.5 and less than 1.8, and still more preferably not less than 0.62 and less than 1.5. When the hydrosilyl groups are contained so that the foregoing functional group ratio will exceed 2, the crosslinking density increases, and it is sometimes impossible to obtain adhesiveness without the addition, or with the addition of a small amount, of an adhesiveness-imparting resin. When the functional group ratio is less than 0.3, the crosslinking becomes too weak, and adhesive deposit upon redetachment and degraded characteristic retention at high temperatures may occur. Hence, by setting a blending ratio of the component A and the component B to fall within a particular range, good adhesiveness can be achieved even without adding an adhesiveness-imparting resin, and, in addition, the composition can be cured at a practically sufficiently fast line speed.

In the present invention, the composition comprising the above-described ingredients A to C may be formulated with a storage stability improving agent for the purpose of improving the storage stability. As this storage stability improving agent, a commonly known compound known as a storage stabilizer for the component B of the present invention can be used without limitation. For example, a compound comprising an aliphatic unsaturated bond, an organic phosphorus compound, an organic sulfur compound, a nitrogen-containing compound, a tin-series compound, an organic peroxide and the like can be suitably used. Specifically, 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morpholinyldithio)benzothiazole, 3-methyl-1-butene-3-ol, 2-methyl-3-butene-2-ol, organosiloxane containing an acetylenic unsaturated group, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene and the like can be mentioned, but these are not to be construed as limiting.

An adhesion-imparting agent for improving the adhesion property to the display panel of the flat panel display can be added to the composition as required. As examples of the adhesion provider, various silane coupling agents, epoxy resins and the like can be mentioned. In particular, a silane coupling agent having a functional group such as an epoxy group, a methacryloyl group, or a vinyl group is preferable because its influence on the curing quality is small and also because it is highly effective for the manifestation of adhesiveness. In combination with a silane coupling agent and an epoxy resin, a catalyst for reacting silyl groups or epoxy groups can be added. When using them, their influence on the hydrosilylation reaction must be taken into consideration.

Various filling agents, antioxidants, ultraviolet absorbents, pigments, surfactants, solvents, and silicon compounds may be added to the composition as appropriate. As specific examples of the above-described filling agents, silica micropowder, calcium carbonate, clay, talc, titanium oxide, zinc oxide, diatomaceous earth, barium sulfate and the like can be mentioned. Of these filling agents, silica micropowder, particularly micropowder silica having a particle diameter of about 50 to 70 nm (the BET specific surface area is 50 to 380 $m^2/g$) is preferable; in particular, surface-treated hydrophobic silica is particularly preferable because of its high function to improve the strength in the preferred direction.

Furthermore, a tackifier resin may be added to the composition as required to enhance the tack and other characteristics thereof; as examples of the tackifier resin, terpene resin, terpene phenol resin, petroleum resin, rosin ester and the like can be mentioned, one of which can be freely selected according to the intended use.

For the characteristic improvements, resins such as phenol resin, acrylic resin, styrene resin, and xylene resin can be added. An adhesive ingredient such as an acrylic adhesive, a styrene block-series adhesive, or an olefin-series adhesive can be added for the same purpose.

An organic solvent such as toluene, xylene, ethyl acetate, or methyl ethyl ketone can be added to the composition; by choosing as appropriate a molecular weight of the ingredient (A) polyoxyalkylene-series polymer and/or a molecular weight or structure of the ingredient (B) hydrosilyl group-containing compound, a composition fluidizable at normal temperature can be obtained substantially without the addition, or with the addition of a small amount, of a solvent. Hence, a composition having an organic solvent content of less than 20% by weight, preferably less than 5% by weight, and a viscosity at 230°C of not more than 100 Pa.s, preferably not more than 50 Pa.s, can be obtained. If the viscosity of the composition exceeds 100 Pa.s, coating with an ordinary coating apparatus such as a roll coater, a reverse coater, or a doctor blade is sometimes difficult.

As stated above, the composition comprising the above-described ingredients A to C exhibits fluidity even at room temperature without the formulation, or with the formulation of a small amount, of an organic solvent, and is therefore also effective as a countermeasure against problems arising during coating of an acrylic-series polymer (acrylic-series adhesive) as used in the prior art, such as solvent volatilization into the environment and indoor environmental contamination and skin irritation with the solvent contained in the adhesive. Also, because the composition exhibits fluidity at normal temperature, problems such as temperature control and tank heating, which have been problematic in adhesively coating a hot-melt adhesive and the like, do not arise. Furthermore, because the composition cures quickly only with heating, new equipment such as for UV curing or electron beam curing is unnecessary. Also, because the curing composition cures by the Si-H group addition reaction to alkenyl groups using a hydrosilylation catalyst, the curing speed is very fast, an advantageous aspect for line production.

Although the method of producing the impact absorption sheet for flat panel display of the present invention is not subject to limitation, the following method is suitable.

A polyoxyalkylene-series polymer, preferably a composition comprising the above-described ingredients A to C, along with an organic solvent as required, is charged to a stirrer with vacuum function and stirred and hence defoamed in a vacuum (under vacuum conditions), and the resulting fluidized product after the vacuum defoaming is coated (cast) on various supports and thermally treated to obtain a sheet. Coating on the support can be performed using, for example, a commonly known coating apparatus such as a gravure coater; a roll coater such as a kiss coater or a comma coater; a die coater such as a slot coater or a fountain coater; a squeeze coater, a curtain coater and the like. In the case of a composition comprising the above-described ingredients A to C, the composition is thermally cured by a heat treatment to give a sheet made of a cured product. Regarding the heat treatment conditions in this case, it is preferable that the composition be heated at 50 to 200°C (preferably 100 to 160°C) for about 0.01 to 24 hours (preferably 0.05 to 4 hours). As the above-described stirrer with vacuum function, a commonly known stirrer equipped with vacuum apparatus may be used; specifically, a planetary (revolution type/rotation type) stirring defoaming apparatus, a defoaming apparatus equipped with a disperser, and the like can be mentioned. The degree of pressure reduction in performing vacuum defoaming is preferably not more than 10 kPa, more preferably not more than 3 kPa. Stirring time varies also depending on the choice of stirrer and the throughput of fluidized product, and is generally preferably about 0.5 to 2 hours.

The impact absorption sheet of the present invention thus obtained exhibits a shear loss compliance (J") of not less than $2.5 \times 10^{-7}$ ($Pa^{-1}$), expressed by the equation shown below.

$$J'' = G'' / (G'^2 + G''^2)$$

(wherein G' indicates storage elastic modulus, and G" indicates loss elastic modulus.)

Shear loss compliance (J") is known as an index of the softness of a visco-elastic article to external stimulation; the impact absorption quality of a sheet, desired by the present invention, refers to an impact absorption quality such that when a sheet is formed on a transparent glass plate (a transparent glass plate incorporated in the flat panel display), and a steel ball 50 mm in diameter and 510 g in weight is freely dropped from a height of 50 mm above the sheet, the transparent glass plate is not broken, as described below; because the impact absorption sheet of the present invention is highly soft to the extent of a shear loss compliance (J") of not less than $2.5 \times 10^{-7}$ ($Pa^{-1}$), it is considered that even with a sheet as thin as, for example, 200 μm, the desired shock absorption quality can be accomplished.

The shear loss compliances (J") of polylauryl methacrylate (PLMA), polybutyl acrylate (PBA), poly-2-ethylhexyl acrylate (PEHA) and the like, which are highly transparent acrylic-series adhesives, are $5.0 \times 10^{-8}$ ($Pa^{-1}$), $6.5 \times 10^{-8}$ ($Pa^{-1}$), and $1.0 \times 10^{-7}$ ($Pa^{-1}$) , respectively, lower than $2.5 \times 10^{-7}$ ($Pa^{-1}$); they do not exhibit excellent shock absorption quality as does the impact absorption sheet of the present invention.

The above-mentioned shear loss compliance (J") can be measured according to the following measurement method and measurement conditions and using a circle (φ7.9 mm) punched out from a sheet having a thickness of 0.2 mm (200 μm) as a measurement sample.

(1) Measurement apparatus (ARES manufactured by Rheometric Scientific)
(2) Measurement conditions
measurement temperature: -30°C
frequency: 15 Hz
(3) Analysis method
J" at measurement temperature: -30°C and frequency: 15 Hz is used.

Moreover, the impact absorption sheet of the present invention has redetachability permitting easy detachment from a glass substrate after once adhering to the glass substrate and the like. In other words, the peel force from a glass plate to be measured by the test method described below is not more than 11 N/25 mm, preferably not more than 8 N/ 25 mm (when the peel force is too small, undesired detachment may occur, and therefore, the peel force is preferably not more than 1 N/25 mm) The peel force of an acrylic adhesive (polylauryl methacrylate (PLMA), polybutyl acrylate (PBA), poly2-ethylhexyl acrylate (PEHA) etc.) from a glass plate as measured by the test method described below

exceeds 11 N/25 mm. Accordingly, it is appreciated that the impact absorption sheet of the present invention is also extremely fine in terms of redetachability.

[Redetachability test]

A PET film (thickness 100 μm) free of a mold-release treatment is adhered to one surface of a sheet (thickness 0.2 mm) and a test piece (width 25 mm and length 100 mm) is cut out. The separator (support) of the test piece was peeled off, pressure bonded to a panel glass substrate (PD200 manufactured by Asahi Glass Co., Ltd.) by one reciprocation of a 2 kg roller, and left standing at room temperature for 24 hr. This was set to a tensile tester, peeled off in a 90° direction at a tensile rate of 300 mm/min, and a peel off adhesive force of the test piece was measured and taken as a release force.

As mentioned above, since the impact absorption sheet of the present invention is obtained by producing a sheet from a defoamation-treated composition (fluid), bubbles (voids) are substantially absent in the sheet and the sheet shows superior optical property (transparency). Therefore, for example, the haze value measured by the following test method is not more than 0.8, preferably not more than 0.6. When a sheet is prepared without a defoamation treatment, such optical property (transparency) is not afforded.

[Haze value measurement]

A sheet (thickness 0.25 mm) was cut out in 30 mmx30 mm to give a test piece, which was adhered to a panel glass substrate (PD200 manufactured by Asahi Glass Co., Ltd., thickness: 2.8 mm) and used as a measurement sample. The haze value was measured using a haze meter HM-150 (manufactured by MURAKAMI COLOR RESEARCH LABORATORY CO., Ltd.), where the sample was set to be on an acceptance surface side of the apparatus, a separator (support) of the test piece was peeled off and the measurement was performed.

The impact absorption sheet of the present invention preferably has a glass transition temperature of -80°C to -50°C, more preferably -75°C to -55°C, and most preferably -73°C to -60°C Having such glass transition temperature, the impact absorption sheet shows superior impact absorbability (impact resistance).

The glass transition temperature here is obtained by a measurement using a sheet (sample with diameter of about 3 mm and thickness of about 3 mm) as a measurement sample by a measurement method using a differential scanning calorimeter (DSC).

The detail of the measurement method and measurement condition is as follows.

(1) Measurement apparatus: DSC200 manufactured by SII Nano Technology Inc.
(2) Measurement conditions
Measurement temperature range: -100°C to -10°C
Temperature rise rate: 10°C/min
Atmospheric gas: nitrogen (flow amount: 200 ml/min)
(3) Analysis method
The intersection of a straight line extending from the baseline on a low temperature side toward a high temperature side, and the tangent drawn from the point where the gradient of the curve in the step-like varying part along with Tg becomes maximum, at the time when a baseline shift along with Tg is clearly observed within the measurement temperature range (-100°C to -10°C), was taken as Tg.

The thickness of the impact absorption sheet of the present invention is generally 10 μm - 2 mm, preferably 50 μm - 1 mm, and more preferably 100 μm - 1 mm. The impact absorption sheet of the present invention has superior impact absorbability particularly in a thin region. To make a flat panel display thinner, the thickness is preferably set to not more than 450 μm more preferably not more than 400 μm, and particularly preferably not more than 300 μm.

The impact absorption sheet of the present invention may additionally have a support (supporting film or sheet).

As the support (supporting film or sheet), a film (sheet) made from a synthetic resin or modified natural substance, paper, all kinds of cloth, a metal foil and the like can be used. Specific examples include single layer films (sheets) made of thermoplastic resins such as polyester (e.g., polybutylene terephthalate (PBT) and the like), ionomer resin wherein molecules of ethylene-methacrylic acid copolymer are crosslinked with metal ion ($Na^+$, $Zn^{2+}$ etc.), EVA (ethylene-vinyl acetate copolymer), PVC (polyvinyl chloride), EEA (ethylene·ethylacrylate copolymer), PE (polyethylene), PP (polypropylene), polyamide, poly butyral, polystyrene and the like; various thermoplastic elastomers showing rubber elasticity such as polystyrene series, polyolefin series, polydiene series, vinyl chloride series, polyurethane series, polyester series, polyamide series, fluorine series, chlorinated polyethylene series, polynorbornane series, polystyrene·polyolefin copolymer series, (hydrogenated) polystyrene·butadiene copolymer series, polystyrene·vinylpolyisoprene copolymer series and the like; polyolefin such as polyethylene, polypropylene and the like blended with a thermoplastic elastomer

and the like, films (sheets) having multiple layers (laminate) made of polyolefin (polypropylene (PP) or polyethylene (PE) etc.)/thermoplastic resin (e.g., EVA)/polyolefin, polyolefin (PP or PE) + thermoplastic elastomer/polyolefin (PP or PE), PP/PE/PP and the like, multi-layer (laminate) of composite polyolefin+thermoplastic elastomer with varying blending ratios, etc., and the like. In addition, impregnated paper, coated paper, quality paper, craft paper, cloth, acetate cloth, nonwoven fabric, glass cloth and the like can be mentioned.

The thickness of the support is generally about 0.025 - 0.5 mm.

When the support is used as a separator, various mold release treatment agents (e.g., silicone mold release treatment agent, fluorine mold release treatment agent, long chain alkyl mold release treatment agent etc.) can be applied to the support surface. Of these, a silicone mold release treatment agent is preferable. As the curing method, a curing method such as UV irradiation, electron beam irradiation and the like are preferably used. Furthermore, of the silicone mold release treatment agents, a cation polymerizable UV curing silicone mold release treatment agent is preferable.

A cation polymerizable UV curing silicone mold release treatment agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curing silicone mold release treatment agent wherein the onium salt photoinitiator is a boron photoinitiator, particularly good release property (mold releasability) can be obtained.

A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include γ-glycidyloxypropyl group, β-(3,4-epoxycyclohexyl)ethyl group, β-(4-methyl-3,4epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd. can be mentioned.

Of the cationic polymerizable silicones, polyorganosiloxane comprising the following structural units (A) - (C) is particularly preferable.

(A)

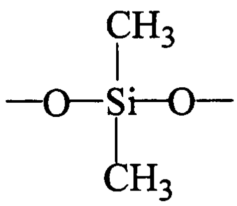

,

(B)

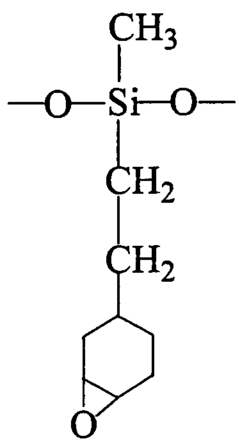

,

(C)

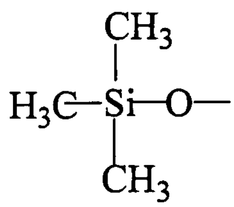

In polyorganosiloxane comprising such structural units (A)- (C), the composition ratio ((A):(B):(C)) of structural units (A) - (C) is particularly preferably 50 - 95:2 - 30:1 - 30 (mol%), and especially preferably 50 - 90:2 - 20:2 - 20 (mol%).

Polyorganosiloxane comprising such structural units (A) - (C) is available as Poly200, Poly201, RCA200, X-62-7622, X-62-7629 and X-62-7660.

On the other hand, as the onium salt photoinitiator, a known product can be used without particular limitation. Specific examples include a compound represented by $(R^1)_2I^+X^-$, $ArN_2^+X^-$ or $(R^1)_3S^+X^-$ (wherein $R^1$ is alkyl group and/or aryl group, Ar is aryl group, $X^-$ is $[B(C_6H_5)_4]^-$, $[B(C_6F_5)_4]^-$, $[B(C_6H_4CF_3)_4]^-$, $[(C_6F_5)_2BF_2]^-$, $[C_6F_5BF_3]^-$, $[B(C_6H_3F_2)_4]^-$, $BF_4^-$, $PF_6^-$, $AsF_6^-$, $HSO_4^-$, $ClO_4^-$ and the like). Of these, a compound of the formula (boron photoinitiator) wherein $X^-$ is $[B(C_6H_5)_4]^-$, $[B(C_6F_5)_4]^-$, $[B(C_6H_4CF_3)_4]^-$, $[(C_6F_5)_2BF_2]^-$, $[C_6F_5BF_3]^-$, $[B(C_6H_3F_2)_4]^-$ or $BF_4^-$ is preferable, and a compound

represented by $(R^1)_2I^+[B(C_6F_5)_4]$ (wherein $R^1$ is substituted or unsubstituted phenyl group) (alkyl iodonium, tetrakis (pentafluorophenyl)borate) is particularly preferable. As the onium salt photoinitiator, antimony (Sb) initiator is conventionally known. However, when an antimony (Sb) initiator is used, double detachment occurs and detachment of an impact absorption sheet from a support tends to be difficult.

While the amount of the onium salt photoinitiator to be used is not particularly limited, it is about preferably 0.1 - 10 parts by weight relative to 100 parts by weight of the cationic polymerizable silicone (polyorganosiloxan). When the amount of use is smaller than 0.1 part by weight, curing of the silicone peel layer may become insufficient. When the amount of use is greater than 10 parts by weight, the cost becomes impractical. When a cationic polymerizable silicone (polyorganosiloxan) and an onium salt photoinitiator are mixed, the onium salt photoinitiator may be dissolved or dispersed in an organic solvent and then mixed with polyorganosiloxan. Specific examples of the organic solvent include alcohol solvents such as isopropyl alcohol, n-butanol and the like; ketone solvents such as acetone, methylethylketone and the like; ester solvents such as ethyl acetate, and the like, and the like.

A mold release treatment agent can be applied, for example, using a general coating apparatus such as those used for roll coater method, reverse coater method, doctor blade method and the like. While the coating amount (solid content) of the mold release treatment agent is not particularly limited, it is generally about 0.05 - 6 $mg/cm^2$.

The impact absorption sheet of the present invention may further contain a protection film in addition to the support, and the surface of the protection film is preferably subjected to a mold release treatment. Specific examples of the protection film include those recited as the specific examples of the above-mentioned support (supporting film). The thickness of the protection film is generally about 10 - 125 $\mu$m.

The surface of the protection film may be coated with various mold release treatment agents (e.g., silicone mold release treatment agent, fluorine mold release treatment agent, long chain alkyl mold release treatment agent etc.). Of these, silicone mold release treatment agents are preferable, and of the silicone mold release treatment agents, a cationic polymerizable UV curing silicone mold release treatment agent is preferable. A more preferable embodiment of a cationic polymerizable UV curing silicone mold release treatment agent is the one recited for the aforementioned support (supporting film).

The cationic polymerizable UV curing silicone mold release treatment agent may further contain an MQ resin for adjusting mold releaseability (release force). As the MQ resin, an appropriate one made of a polymer of a monofunctional M unit represented by the formula: $R_3SiO$- known as a tackifier of a silicone adhesive and the like, and a tetrafunctional Q unit represented by $Si(O-)_4$ can be used. In the aforementioned formula, R optionally has an appropriate structural unit, for example, an organic group such as an aliphatic hydrocarbon group such as methyl group, ethyl group, propyl group and the like, an aromatic hydrocarbon group such as phenyl group and the like, an olefin group such as vinyl group and the like, a hydrolysable group such as hydroxyl group and the like, and the like. Three R's may be the same or different. Particularly preferable MQ resin has a monofunctional M unit of $(CH)_3SiO$-. While the composition ratio (M: Q) of the M unit and Q unit in the MQ resin is not particularly limited, it is preferably 20 - 60:40 - 80 (mol%), and more preferably 25 - 50:50 - 75 (mol%). An MQ resin having the composition ratio of M unit and Q unit within such preferable range affords preferable results in that it is superior in shape retention, improves the release force and can control to an object release force.

A mold release treatment agent can be applied to a protection film, for example, using a general coating apparatus such as those used for roll coater method, reverse coater method, doctor blade method and the like. While the coating amount (solid content) of the mold release treatment agent is not particularly limited, it is generally about 0.05 - 6 $mg/cm^2$.

The impact absorption sheet of the present invention after production is generally wound in the coating direction (cast direction) of a production starting material composition during production to give a roll and shipped and distributed in the form of a roll. When the thickness of the sheet varies greatly between the both ends in the width direction of the sheet (i.e., perpendicular direction relative to the application (cast) direction of the composition during production), adhesive sticks out from the end (end of sheet having greater thickness) of the roll, which in turn easily causes problems of contamination by the attachment of the adhesive to the roll during the passline of the apparatus in a laminating adhesion step and the like, decreased work efficiency due to the stickiness of the end of the sheet and the like. As used herein, by the "adhesive sticks out" is meant a phenomenon in a roll made by winding an impact absorption sheet with a separator (support), where an impact absorption layer (sheet) sticks out from the separator (support) at the end of the roll. Since an adhesive easily sticks out when the sheet has a greater thickness, when the thickness of the sheet is not less than 70 $\mu$m, the impact absorption sheet of the present invention preferably has a thickness precision of not more than $\pm$5%, more preferably not more than $\pm$3%, in the width direction of the sheet. That is, when the thickness of one end in the width direction of the sheet is X, the thickness of the other end is preferably within the range of 0.95X - 1.05X, more preferably within the range of 0.97X - 1.03X. While the length in the width direction of the impact absorption sheet of the present invention varies depending on the shape, size and the like of the flat panel display to which the sheet is applied, it is generally within the range of 30 - 2000 mm. The total length of the film as a roll (length in the winding direction) is generally within the range of 10 m - 500 m.

In the present specification, the "thickness" of the "thickness of the sheet" free of a modifying phrase of "end in the width direction of the sheet" means an average thickness in the width direction of the sheet. The "thickness of the sheet" and "thickness of the end in the width direction of the sheet" were measured according to the following method.

[Measurement method of thickness of the sheet and thickness of end in the width direction of the sheet]

The measurement points were set at a pitch of 10 mm from one end to the other end in the width direction of a sheet. The thickness was measured at each measurement point using a dial gauge (SMD-565 manufactured by TECLOCK), where the thickness was measured 3 times at each measurement point, and an average of 3 measurement values was taken as the thickness at each measurement point. The average of the thickness values measured at all measurement points in the width direction of the sheet was obtained and taken as the "thickness of the sheet". In addition, the thickness values at the measurement points in both ends of the sheet in the width direction thereof were taken as the "thickness of end in the width direction of the sheet".

In the impact absorption sheet of the present invention, a sheet having a thickness precision of not more than ±5% in the width direction can be afforded by controlling, for example, the bore of die during application.

The impact absorption sheet of the present invention has impact absorbability where a test member consisting of the sheet and a transparent glass plate (thickness 2.8 mm and flat plane size 30 mm x 30 mm) laminated thereon is placed on a stainless plate with the transparent glass plate side facing the stainless plate, a steel ball (diameter 50 mm, weight 510 g) is freely dropped from 50 mm vertically above the sheet but the aforementioned transparent glass plate is not broken.

The "impact absorbability" used here is based on the following test contents.

First, a transparent glass plate (PD200 manufactured by Asahi Glass Co., Ltd., thickness 2.8 mm, flat plane size 30 mm × 30 mm) made of a high strain point glass and commercially available as a plasma display glass plate was used, and a steel ball (diameter 50 mm, weight 510 g) was freely dropped from 50 mm vertically above the sheet. The height at which the transparent glass plate was broken was studied. As a result, a single transparent glass plate was actually measured to be broken at a height of not less than 25 mm. That is, when an impact comparable to that produced by free drop of a steel ball (diameter 50 mm, weight 510 g) from a height of not less than 25 mm is applied, the possibility of destruction of a flat panel display (particularly glass substrate) increases even during general use, which was assumed to be practically unpreferable.

Then, from a practical viewpoint, the present inventors assumed that a design preventing breakage of a transparent glass plate incorporated into a flat panel display would require that the transparent glass plate be not broken when an impact absorption sheet to be an impact attenuator layer is formed on a transparent glass plate and, in consideration of a safety factor, a steel ball (diameter 50 mm, weight 510 g) is freely dropped from a height twice the height at which the transparent glass plate is broken, i.e., from the height of 50 mm, and determined this to be the test conditions of impact absorbability (impact resistance) in the present invention.

That is, the "transparent glass plate" in Claim 4 refers to a transparent glass plate (PD200 manufactured by Asahi Glass Co., Ltd., thickness 2.8 mm, flat plane size 30 mm × 30 mm) made of a high strain point glass and commercially available as a plasma display glass plate. An impact absorption sheet is laminated on a transparent glass plate to give a test member. The size of the impact absorption sheet at this time is preferably the same as that of the transparent glass plate. The "stainless plate" refers to one wherein a 0.030 mm width linear pattern (height 0.050 mm) is formed in a lattice mesh on the surface of an SKD11 (flat plane size 300 × 300 mm, thickness 25 mm) so that rectangular concaves (length: 0.30 mm, width: 0.96 mm) will be arranged in height and width. The "steel ball" refers to a spherical member (diameter 50 mm, weight 510 g) made of a high carbon chrome material wherein chrome is added to high-carbon steel as a base. The position of free drop of a steel ball is set to be the center of a test member which is a laminate of an impact absorption sheet and a transparent glass plate. The "transparent glass plate be not broken" means not only that the glass plate was not broken into two or more pieces but also the glass plate was free of even a crack (flaw) in two or more tests out of 3 times of test.

The impact absorption sheet of the present invention has particularly superior impact absorbability in a small thickness region. As is clear from the below-mentioned Examples 1, 6, 11, 16, 21 and 26, impact absorbability is afforded where a transparent glass plate laminated on the sheet is not broken even when the sheet thickness is set to 200 μm and a steel ball (diameter 50 mm, weight 510 g) is freely dropped from 50 mm vertically above the sheet, and high impact absorbability is afforded where a transparent glass plate laminated on the sheet is sometimes broken when the sheet thickness is set to 200 μm and a steel ball (diameter 50 mm, weight 510 g) is freely dropped from 70 mm, which is still higher than 50 mm, vertically above the sheet (see Examples 1, 6, 11, 16, 21 and 26).

In contrast, for a sheet with a highly transparent acrylican adhesive and having a sheet thickness of 200 μm, a transparent glass plate laminated on the sheet is broken when a steel ball (diameter 50 mm, weight 510 g) is freely dropped from 50 mm vertically above the sheet (Comparative Examples 1, 6 and 8).

For the impact absorption sheet of the present invention, the minimum thickness of the sheet at which a

transparent glass plate laminated on the sheet is not broken even when a steel ball (diameter 50 mm, weight 510 g) is freely dropped from 50 mm vertically above the sheet is generally about 100 μm.

That is, the impact absorption sheet of the present invention having a sheet thickness of at least not less than 100 μm has impact absorbability as evidenced by the destruction height (h) of the transparent glass plate as defined by the below-mentioned impact absorbability test (steel ball drop test) of greater than 50 mm, where the impact absorbability is improved as the sheet thickness grows. When the sheet thickness is, for example, 200 μm, the destruction height (h) of the transparent glass plate generally becomes about 60 - 85 mm, when the sheet thickness is, for example, 300 μm, the destruction height (h) of the transparent glass plate generally becomes about 90 - 120 mm, when the sheet thickness is, for example, 400 μm, the destruction height (h) of the transparent glass plate generally becomes about 120 - 165 mm, and when the sheet thickness is, for example, 1000 μm, the destruction height (h) of the transparent glass plate generally becomes about 200 - 300 mm.

To realize a flat panel display having extremely high impact resistance with the impact absorption sheet of the present invention, the destruction height (h) of the transparent glass plate as defined by the below-mentioned impact absorbability test (steel ball drop test) is preferably not less than 70 mm, more preferably not less than 80 mm.

The impact absorption sheet of the present invention can be mounted on a flat panel display by a known method. For example, the impact absorption sheet can be adhered to a substrate material of an optical filter having a reflection preventive film and the like by Roll to Roll production process, and then mounted on a flat panel display.

The "flat panel display" in the context of the present invention includes liquid crystal display (LCD), plasma display (PDP), organic or inorganic electroluminescence display, organic EL display (ELD), surface electrolytic display (SED) and the like.

The impact absorption sheet for a flat panel display of the present invention can be preferably used as an impact absorption function layer for these liquid crystal display (LCD), plasma display (PDP), organic or inorganic electroluminescence display (ELD), surface electrolytic display (SED) and the like. Particularly, it is most suitable for a flat panel display with a large display size, specifically, plasma display (PDP).

A flat panel display apparatus mounting the impact absorption sheet for a flat panel display of the present invention can be made thinner and lighter, with a display panel strong against a physical impact.

The impact absorption sheet for a flat panel display of the present invention permits easy control of thickness, as well as easy control of size during the production step. Therefore, it can easily adapt to the scaling up of a display size. Accordingly, the impact absorption sheet for a flat panel display of the present invention is useful for a panel with a display size of 1 - 100 inch, particularly 19 - 70 inch.

## Examples

The present invention is explained in more detail by referring to the following Examples and Comparative Examples, which are not to be construed as limitative.

The impact absorbability of the sheet in the Examples and Comparative Examples was evaluated according to the following impact absorbability test.

[Impact absorbability test (steel ball drop test)]

The test apparatus shown in Fig. 1 was used to perform the test. Fig. 1 shows a schematic diagram showing the whole apparatus.

As the test glass substrate 2, a transparent glass plate for plasma display (PDP) (high strain point glass (PD200 manufactured by Asahi Glass Co., Ltd.), thickness: 2.8 mm, flat plane size: 30 mm × 30 mm), which is considered to be particularly weak against impact from among flat panel displays, was used. The surface of a stainless plate 3 made of SKD11 was etched to form a linear pattern (width 0.030 mm, height 0.050 mm) as shown in Fig. 2, so that rectangular concaves (length: 0.30 mm, width: 0.96 mm) would be arranged in parallel in the height and width. A test member 10 wherein a sample piece 1 (impact absorption sheet) was laminated on a test glass plate 2 was placed on the surface 3a of the pattern having lattice mesh with the impact absorption sheet 1 facing upward, and a steel ball 4 was dropped in the center of the test member to perform the test. The height from which the steel ball 4 was dropped was changed, and the height at which the test glass plate 2 was actually broken (destruction height h) was visually measured. The steel ball drop test was repeated 3 times for one height and, when the test glass plate 2 was broken in two or more tests, the height at that time was taken as destruction height h in the test.

The symbol 5 in the Figures shows an electromagnet that controls holding and detachment (dropping) of steel ball 4.

Separately, one transparent glass plate PD200 (thickness: 2.8 mm, flat plane size 30 mm × 30 mm) alone was placed on the above-mentioned stainless plate, a steel ball was dropped in the center of the transparent glass plate to perform breakage test. As a result, the height at which the transparent glass plate was broken was 25 mm.

**[Example 1]**

A polyoxyalkylene-series polymer for component A (number average molecular weight: about 20,000), a hydrosilyl compound for component B in an amount that affords a functional group ratio of 0.62 (its hydrosilyl group amount relative to alkenyl group amount of polyoxyalkylene-series polymer for component A), and a composition containing a hydrosilylation catalyst (manufactured by KANEKA Corporation, 0.62 mol relative to 1 mol of alkenyl group in component A) for component C were placed in a stirrer with a vacuum apparatus (Mini Dappo manufactured by SEATEC CORPORATION), and the mixture was stirred in vacuo (100 Pa) for 1 hr for defoaming. Then, the vacuum defoamed composition was applied (cast) onto a polyester film (thickness: 50 μm) subjected to a mold release treatment, using a roll coater at room temperature to a composition thickness of 200 μm. The composition was cured by heating in a heating oven at 130°C for 5 min. A polyester film (thickness: 50 μm) subjected to a mold release treatment in the same manner was adhered to the thus-obtained cured sheet to give an impact absorption sheet (measured thickness: 201 μm). The obtained impact absorption sheet was highly transparent and free of mixed bubbles. Moreover, the shear loss compliance (J") of the sheet was $9.0 \times 10^{-7}$ ($Pa^{-1}$), the glass transition temperature was -70°C, and the peel force of the sheet from the glass plate was 5.5 N/25 mm.

As a mold release treatment agent used for a mold release treatment of the above-mentioned two pieces of the polyester film (thickness: 50 μm) subjected to the mold release treatment, a composition containing Poly200 (manufactured by Arakawa Chemical Industries, Ltd.) and CATA211 (manufactured by Arakawa Chemical Industries, Ltd.) at a weight ratio (Poly200:CATA211) of 100:0.6 was used.

The impact absorption sheet (thickness: 201 μm) prepared above was adhered to a high strain point glass substrate (PD200, thickness 2.8 mm, flat plane size: 30 mm × 30 mm) to give a test member. The test member was subjected to the aforementioned impact absorption test (steel ball drop test), and the height at which the transparent glass plate was broken (destruction height h) was measured. The results are shown in Table 1. Separately, an impact absorption sheet (measured thickness 253 μm) was prepared in the same manner except that the thickness of the composition was 250 μm. The haze value thereof was measured and found to be 0.3.

**[Examples 2 - 5]**

In the same manner as in Example 1 except that the thickness of the composition applied was changed to 300 μm, 400 μm, 500 μm and 1000 μm, impact absorption sheets were prepared. They were subjected to an impact absorption test (steel ball drop test), and the height at which the transparent glass plate was broken (destruction height) was measured. The results are shown in Table 1.

**[Example 6]**

Using a composition (manufactured by Kaneka Corporation) similar to the composition of Example 1 except that the functional group ratio of hydrosilyl group amount of the hydrosilyl compound for component B relative to the alkenyl group amount of the polyoxyalkylene-series polymer for component A was 0.65, and in the same manner as in Example 1, an impact absorption sheet (measured thickness 214 μm) was prepared with the thickness of the composition applied of 200 μm. The obtained impact absorption sheet was highly transparent and free of mixed bubbles. Moreover, the shear loss compliance (J") of the sheet was $5.2 \times 10^{-7}$ ($Pa^{-1}$), the glass transition temperature of the sheet was -68°C, and the peel force of the sheet from the glass plate was 4.0N/25 mm.

Then, an impact absorption test (steel ball drop test) was performed, and the height at which the transparent glass plate was broken (destruction height) was measured. The results are shown in Table 1.

Separately, an impact absorption sheet (measured thickness 255 μm) was prepared with the thickness of the composition applied of 250 μm. The haze value thereof was measured and found to be 0.3.

**[Examples 7 - 10]**

In the same manner as in Example 6 except that the thickness of the composition applied was changed to 300 μm, 400 μm, 500 μm and 1000 μm, impact absorption sheets were prepared. Moreover, an impact absorption test (steel ball drop test) was performed, and the height at which the transparent glass plate was broken (destruction height) was measured. The results are shown in Table 1.

**[Example 11]**

Using a composition (manufactured by Kaneka Corporation) similar to the composition of Example 1 except that the functional group ratio of hydrosilyl group amount of the hydrosilyl compound for component B to the alkenyl

group amount of the polyoxyalkylene-series polymer for component A was 0.80, and in the same manner as in Example 1 except that the thickness of the composition applied was changed to 200 μm, an impact absorption sheet (measured thickness: 197 μm) was prepared. The obtained impact absorption sheet was highly transparent and free of mixed bubbles. Moreover, the shear loss compliance (J") of the sheet was $3.2\times10^{-7}$ ($Pa^{-1}$), the glass transition temperature of the sheet was -68°C, and the peel force of the sheet from the glass plate was 3.5N/25 mm.

Then, an impact absorption test (steel ball drop test) was performed, and the height at which the transparent glass plate was broken (destruction height) was measured. The results are shown in Table 1.

Separately, an impact absorption sheet (measured thickness 251 μm) was prepared with the thickness of the composition applied of 250 μm. The haze value thereof was measured and found to be 0.3.

**[Examples 12 - 15]**

In the same manner as in Example 11 except that the thickness of the composition applied was respectively changed to 300 μm, 400 μm, 500 μm and 1000 μm, impact absorption sheets were prepared. Moreover, an impact absorption test (steel ball drop test) was performed, and the height at which the transparent glass plate was broken (destruction height) was measured. The results are shown in Table 1.

**[Comparative Example 1]**

Butyl acrylate (97 parts by weight, hereinafter to be abbreviated as "parts"), acrylic acid (3 parts) and azobisisobutyronitrile (0.4 part) were dissolved in ethyl acetate (100 parts) and the mixture was reacted with stirring at about 60°C to give a solution of an acrylic polymer. An isocyanate crosslinking agent (3 parts) was added, and the mixture was applied to a 25 μm-thick polyester separator and dried by heating. It was adhered to a thickness of 200 μm, and the laminate was directly adhered to a high strain point glass (PD200) to give a sheet (measured thickness of the sheet: 214 μm). The glass transition temperature of the obtained sheet was -38°C, and the shear loss compliance (J") of the sheet was $6.5\times1010^{-8}$ ($Pa^{-1}$). The sheet could not be released from the glass plate (peel force: not less than 50N/25 mm).

Then, an impact absorption test (steel ball drop test) was performed, and the height at which the transparent glass plate was broken (destruction height) was measured. The results are shown in Table 1.

**[Comparative Examples 2 - 5]**

In the same manner as in Comparative Example 1 except that the thickness of adhesion of the composition in Comparative Example 1 was respectively changed to 400 μm, 425 μm, 450 μm and 475 μm, impact absorption sheets were prepared. Moreover, an impact absorption test (steel ball drop test) was performed, and the height at which the transparent glass plate was broken (destruction height) was measured. The results are shown in Table 1.

**[Comparative Example 6]**

The procedure of Example 1 was followed except that a UV curing acrylic adhesive comprising, as a main component, an acrylic polymer comprising 2-ethylhexy acrylate as a main monomer was applied to a thickness of 200 μm and directly adhered to a high strain point glass (PD200) (measured thickness: 195 μm). The glass transition temperature of the sheet was -63°C. The shear loss compliance (J") of the sheet was $1.0\times10^{-7}$ ($Pa^{-1}$), and the peel force of the sheet from the glass plate was 11.5N/25 mm.

Then, an impact absorption test (steel ball drop test) was performed, and the height at which the transparent glass plate was broken (destruction height) was measured. The results are shown in Table 1.

**[Comparative Example 7]**

In the same manner as in Comparative Example 6 except that the thickness of the composition applied was changed to 400 μm, an impact absorption sheet (measured thickness: 400 μm) was prepared. Moreover, an impact absorption test (steel ball drop test) was performed, and the height at which the transparent glass plate was broken (destruction height) was measured. The results are shown in Table 1.

**[Comparative Example 8]**

The procedure of Example 1 was followed except that butyl acrylate (97 parts), acrylic acid (3 parts) and azobisisobutyronitrile (0.4 part) were dissolved in ethyl acetate (100 parts), the mixture was reacted with stirring at about 60°C to give a solution of an acrylic polymer. An isocyanate crosslinking agent (3 parts) was added, and the mixture

was applied to a 25 μm-thick polyester separator and dried by heating to form an adhesive layer, an adhesive layer (thickness 25 μm) made of the aforementioned acrylic adhesive was adhered to a 200 μm-thick ethylene-vinyl acetate copolymer resin film (EVAFLEX P2807 manufactured by DU PONT-MITSUI POLYCHEMICALS CO., LTD.) as an impact attenuator layer to give a crack-preventive sheet (thickness 225 μm) (measured thickness of the sheet: 227 μm), and the crack-preventive sheet was directly adhered to a high strain point glass (PD200).

**[Comparative Example 9]**

The procedure of Example 1 was followed except that butyl acrylate (97 parts), acrylic acid (3 parts) and azobisisobutyronitrile (0.4 part) were dissolved in ethyl acetate (100 parts), the mixture was reacted with stirring at about 60°C to give a solution of an acrylic polymer. An isocyanate crosslinking agent (3 parts) was added, and the mixture was applied to a 25 μm-thick polyester separator and dried by heating to form an adhesive layer, an adhesive layer (thickness 25 μm) made of the aforementioned acrylic adhesive was adhered to a 400 μm-thick ethylene-vinyl acetate copolymer resin film (EVAFLEX P2807 manufactured by DU PONT-MITSUI POLYCHEMICALS CO., LTD.) as an impact attenuator layer to give a crack-preventive sheet (thickness 425 μm) (measured thickness of the sheet: 433 μm), and the crack-preventive sheet was directly adhered to a high strain point glass (PD200).

**[Example 16]**

Using a composition (manufactured by Kaneka Corporation) similar to the composition of Example 1 except that the composition was adjusted to afford a functional group ratio of hydrosilyl group amount of the hydrosilyl compound for component B to alkenyl group amount of the polyoxyalkylene-series polymer for component A of 0.50, and in the same manner as in Example 1, an impact absorption sheet (measured thickness 202 μm) was prepared with the thickness of the composition applied of 200 μm. The obtained impact absorption sheet was highly transparent and free of mixed bubbles. The shear loss compliance (J") of the sheet was $2.3\times10^{-6}$ ($Pa^{-1}$), and the peel force of the sheet from the glass plate was 6.0N/25 mm. Then, an impact absorption test (steel ball drop test) was performed, and the height at which the transparent glass plate was broken (destruction height) was measured. The results are shown in Table 1.

Separately, an impact absorption sheet (measured thickness 248 μm) was prepared by setting the thickness of the composition applied to 250 μm. The haze value thereof was measured and found to be 0.3.

**[Examples 17 - 20]**

In the same manner as in Example 16 except that the thickness of the composition applied was respectively changed to 300 μm, 400 μm, 500 μm and 1000 μm, impact absorption sheets were prepared. Moreover, an impact absorption test (steel ball drop test) was performed, and the height at which the transparent glass plate was broken (destruction height) was measured. The results are shown in Table 1.

**[Example 21]**

Using a composition (manufactured by Kaneka Corporation) similar to the composition of Example 1 except that the composition was prepared to afford a functional group ratio of hydrosilyl group amount of the hydrosilyl compound for component B to alkenyl group amount of the polyoxyalkylene-series polymer for component A of 1.50, and in the same manner as in Example 1, an impact absorption sheet (measured thickness 212 μm) was prepared with the thickness of the composition applied of 200 μm. The obtained impact absorption sheet was highly transparent and free of mixed bubbles. The shear loss compliance (J") of the sheet was $9.5\times10^{-7}$ ($Pa^{-1}$), and the peel force of the sheet from the glass plate was 7.5N/25 mm. Then, an impact absorption test (steel ball drop test) was performed, and the height at which the transparent glass plate was broken (destruction height) was measured. The results are shown in Table 1.

Separately, an impact absorption sheet (measured thickness 245 μm) was prepared by setting the thickness of the composition applied to 250 μm. The haze value thereof was measured and found to be 0.4.

**[Examples 22 - 25]**

In the same manner as in Example 21 except that the thickness of the composition applied was respectively changed to 300 μm, 400 μm, 500 μm and 1000 μm, impact absorption sheets were prepared. Moreover, an impact absorption test (steel ball drop test) was performed, and the height at which the transparent glass plate was broken (destruction height) was measured. The results are shown in Table 1.

**[Example 26]**

Using a composition (manufactured by Kaneka Corporation) similar to the composition of Example 1 except that the composition was prepared to afford a functional group ratio of hydrosilyl group amount of the hydrosilyl compound for component B to alkenyl group amount of the polyoxyalkylene-series polymer for component A of 1.80, and in the same manner as in Example 1, an impact absorption sheet (measured thickness 208 μm) was prepared by setting the thickness of the composition applied to 200 μm. The obtained impact absorption sheet was highly transparent and free of mixed bubbles. The shear loss compliance (J") of the sheet was $3.2\times10^{-7}$ ($Pa^{-1}$), and the peel force of the sheet from the glass plate was 10.3N/25 mm. Then, an impact absorption test (steel ball drop test) was performed, and the height at which the transparent glass plate was broken (destruction height) was measured. The results are shown in Table 1.

Separately, an impact absorption sheet (measured thickness 258 μm) was prepared by setting the thickness of the composition applied to 250 μm. The haze value thereof was measured and found to be 0.4.

**[Examples 27 - 30]**

In the same manner as in Example 21 except that the thickness of the composition applied was respectively changed to 300 μm, 400 μm, 500 μm and 1000 μm, impact absorption sheets were prepared. Moreover, an impact absorption test (steel ball drop test) was performed, and the height at which the transparent glass plate was broken (destruction height) was measured. The results are shown in Table 1.

Table 1

| | given thickness (μm) | measured thickness (μm) | destruction height (h) (mm) | J″ ($Pa^{-1}$) | peel force (N/25) | haze |
|---|---|---|---|---|---|---|
| Ex. 1 | 200 | 210 | 82 | $9.0\times10^{-6}$ | 5.5 | |
| | 250 | 253 | | | | 0.3 |
| Ex. 2 | 300 | 303 | 115 | | | |
| Ex. 3 | 400 | 417 | 132 | | | |
| Ex. 4 | 500 | 505 | 145 | | | |
| Ex. 5 | 1000 | 996 | 240 | | | |
| Ex. 6 | 200 | 214 | 83 | $5.2\times10^{-7}$ | 4.0 | |
| | 250 | 255 | | | | 0.3 |
| Ex. 7 | 300 | 308 | 111 | | | |
| Ex. 8 | 400 | 399 | 128 | | | |
| Ex. 9 | 500 | 489 | 145 | | | |
| Ex. 10 | 1000 | 985 | 240 | | | |
| Ex. 11 | 200 | 197 | 70 | $3.2\times10^{-7}$ | 3.5 | |
| | 250 | 255 | | | | 0.3 |
| Ex. 12 | 300 | 300 | 108 | | | |
| Ex. 13 | 400 | 404 | 152 | | | |
| Ex. 14 | 500 | 552 | 183 | | | |
| Ex. 15 | 1000 | 1012 | 285 | | | |
| Ex. 16 | 200 | 202 | 75 | $2.3\times10^{-6}$ | 6.0 | |
| | 250 | 248 | | | | 0.3 |
| Ex. 17 | 300 | 310 | 97 | | | |
| Ex. 18 | 400 | 390 | 125 | | | |
| Ex. 19 | 500 | 487 | 133 | | | |
| Ex. 20 | 1000 | 986 | 207 | | | |
| Ex. 21 | 200 | 212 | 80 | $7.9\times10^{-7}$ | 7.5 | |
| | 250 | 245 | | | | 0.4 |
| Ex. 22 | 300 | 295 | 118 | | | |
| Ex. 23 | 400 | 393 | 150 | | | |
| Ex. 24 | 500 | 520 | 178 | | | |
| Ex. 25 | 1000 | 1020 | 283 | | | |
| Ex. 26 | 200 | 208 | 84 | $9.5\times10^{-7}$ | 10.3 | |
| | 250 | 258 | | | | 0.4 |
| Ex. 27 | 300 | 305 | 119 | | | |
| Ex. 28 | 400 | 395 | 163 | | | |
| Ex. 29 | 500 | 510 | 176 | | | |
| Ex. 30 | 1000 | 1040 | 278 | | | |
| Com. Ex. 1 | 200 | 214 | 30 | $6.5\times10^{-8}$ | Not detachable | |
| Com. Ex. 2 | 400 | 412 | 87 | | | |

| | | | | | | |
|---|---|---|---|---|---|---|
| Com. Ex. 3 | 425 | 426 | 87 | | | |
| Com. Ex. 4 | 450 | 450 | 88 | | | |
| Com. Ex. 5 | 475 | 473 | 97 | | | |
| Com. Ex. 6 | 200 | 195 | 47 | $1.0\times10^{-7}$ | 11.5 | |
| Com. Ex. 7 | 400 | 394 | 113 | | | |
| Com. Ex. 8 | 225 | 227 | 43 | | | |
| Com. Ex. 9 | 425 | 433 | 95 | | | |

As is clear from Table 1, it is appreciated that the impact absorption sheets of Examples 1 - 30 had a sheet thickness within the range of 200 - 1000 μm, all had a destruction height (h) of the transparent glass plate of over 50 mm, and had sufficient impact absorbability, and therefore, can be used particularly in a thin thickness region of 200 - 400 μ.

In addition, the impact absorption sheets of Examples 1 - 30 showed a small peel force from the transparent glass plate, permitting smooth peel off from a transparent glass plate, and are superior in redetachability.

On the other hand, the sheets of the Comparative Examples comprising an acrylic polymer and the like show a destruction height (h) of the transparent glass plate of over 50 mm by setting the thickness of the sheets to not less than 400 μm. Thus, to achieve practically satisfactory impact absorbability, the sheet needs to have a thickness greater than a certain level. As a result, the sheet is not sufficiently satisfactory from the aspects of thinner flat panel display and light weight thereof. In addition, the peel force from a transparent glass plate is high, making it difficult to release from the transparent glass plate, and good redetachability cannot be achieved.

**[Example 31]**

Each of sheet A prepared in the same manner as in Example 4 (measured thickness of the sheet: 495 μm, sheet width: 1000 mm, laminate of support and protection film), sheet B prepared in the same manner as in Example 14 (measured thickness of the sheet: 501 μm, sheet width: 1000 mm, laminate of support and protection film) and sheet C prepared in the same manner as in Example 14 (measured thickness of the sheet: 503 μm, sheet width: 1000 mm, laminate of support and protection film) was wound in the coating direction (cast direction) using a slitting apparatus (general slitting apparatus) while slitting (clipping) both ends in a sheet width of 600 mm to give rolls (roll A, roll B and roll C).

The thickness precision in the sheet width direction of these rolls A - C was ±1.6%, ±4.5% and ±6.2%, respectively. The difference in the thickness precision in the sheet width direction of these rolls A - C is attributable to the difference in the die bore of the roll coaters used for application (coating) of the composition during sheet production.

As a result of the observation of sticking out of the adhesive from the ends of these rolls A - C, sticking out of the adhesive from the ends of the rolls A and B was not observed, and stickiness was absent. In contrast, the adhesive stuck out from the ends of the roll C, and stickiness was present.

**Industrial applicability**

As mentioned above, according to the present invention, an impact absorption sheet for flat panel display can be obtained, which can meet the size reduction and weight reduction of flat panel display, and which affords practically sufficient impact absorbability even in an area of thin film where practically sufficient impact absorbability has not been conventionally achieved.

According to the present invention, moreover, an impact absorption sheet for flat panel display can be realized, which not only has superior impact absorbability but is also superior in easy adhesion to flat panel display and redetachability after adhesion.

According to the present invention, furthermore, a production method of an impact absorption sheet for flat panel display is provided, which can easily produce an impact absorption sheet for flat panel display that permits easy thickness control and affords superior impact absorbability particularly in a thin film area.

According to the present invention, moreover, an impact absorption method of flat panel display is provided, which can achieve size reduction and weight reduction of flat panel display, and also, sufficient crack resistance of a transparent glass plate.

According to the present invention, furthermore, a thin flat panel display having superior impact resistance can be provided where a glass plate incorporated in the display resists breakage.

This application is based on a patent application No. 2005-111414 filed in Japan, the contents of which are

incorporated in full herein by this reference.

## Claims

1. An impact absorption sheet for flat panel display comprising a polyoxyalkylene-series polymer as the main component.

2. The impact absorption sheet for flat panel display of claim 1, consisting of a cured product obtained by curing a composition comprising the following components A to C:

   A: polyoxyalkylene-series polymer having at least one alkenyl group in each molecule
   B: compound having an average of 2 or more hydrosilyl groups in each molecule
   C: hydrosilylation catalyst.

3. The impact absorption sheet for flat panel display of claim 1 or 2, wherein the sheet has a glass transition temperature of -80°C to -50°C.

4. An impact absorption sheet for flat panel display comprising a polyoxyalkylene-series polymer as the main component, having an impact resistance such that when a test member prepared by laminating the impact absorption sheet on a transparent glass plate 2.8 mm in thickness and 30 mm x 30 mm in plane size is placed on a stainless steel plate with the transparent glass plate side facing the stainless steel plate, and a steel ball 50 mm in diameter and 510 g in weight is freely dropped from a height of 50 mm vertically apart from the impact absorption sheet, the transparent glass plate is not broken.

5. An impact absorption sheet for flat panel display with a polyoxyalkylene-series polymer as the main component, wherein the shear loss compliance (J") expressed by the following equation is not less than $2.5 \times 10^{-7}$ ($Pa^{-1}$) :

$$J''=G''/(G'^2+G''^2)$$

   (wherein, G' indicates storage elastic modulus, and G" indicates loss elastic modulus).

6. The impact absorption sheet for flat panel display of any of claims 1 to 5, wherein the thickness precision of the sheet in the width direction of the sheet is not more than ±5% at a sheet thickness of not less than 70 μm.

7. A use of a polyoxyalkylene-series polymer for producing an impact absorption sheet for flat panel display.

8. A method of absorbing impact on a flat panel display using a polyoxyalkylene-series polymer.

9. A method of producing an impact absorption sheet for flat panel display, comprising a step for stirring and hence defoaming a fluid comprising a polyoxyalkylene-series polymer under vacuum conditions, then coating the product, and thermally curing the coated film of the defoamed fluidized product to obtain a sheet.

10. A method of producing an impact absorption sheet for flat panel display, comprising stirring and hence defoaming a fluid comprising the following components A to C under vacuum conditions, then coating the product, and thermally curing the coated film of the defoamed fluid to obtain a sheet:

    A: polyoxyalkylene-series polymer having at least one alkenyl group in each molecule
    B: compound having an average of two or more hydrosilyl groups in each molecule
    C: hydrosilylation catalyst.

11. A flat panel display equipped with the impact absorption sheet of any of claims 1 to 6.

FIG. 1

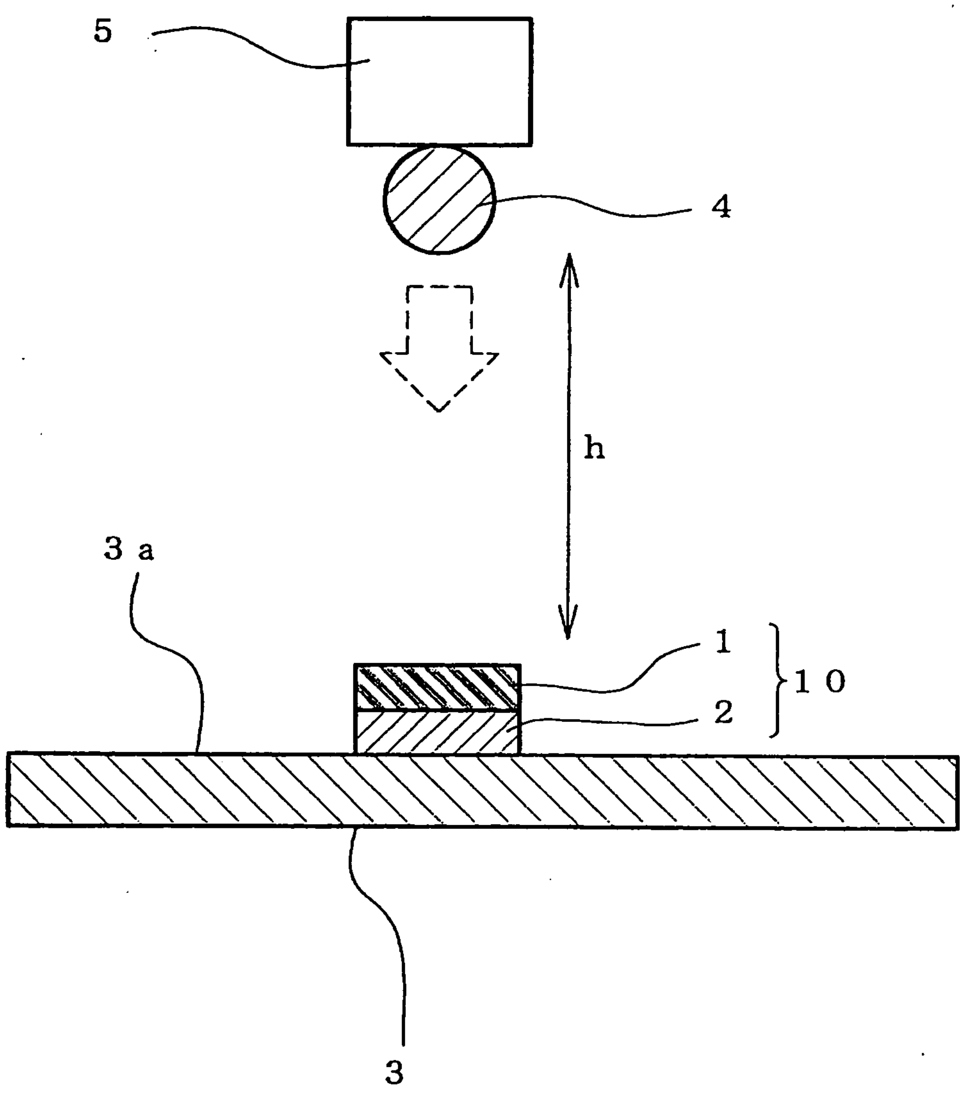

FIG. 2

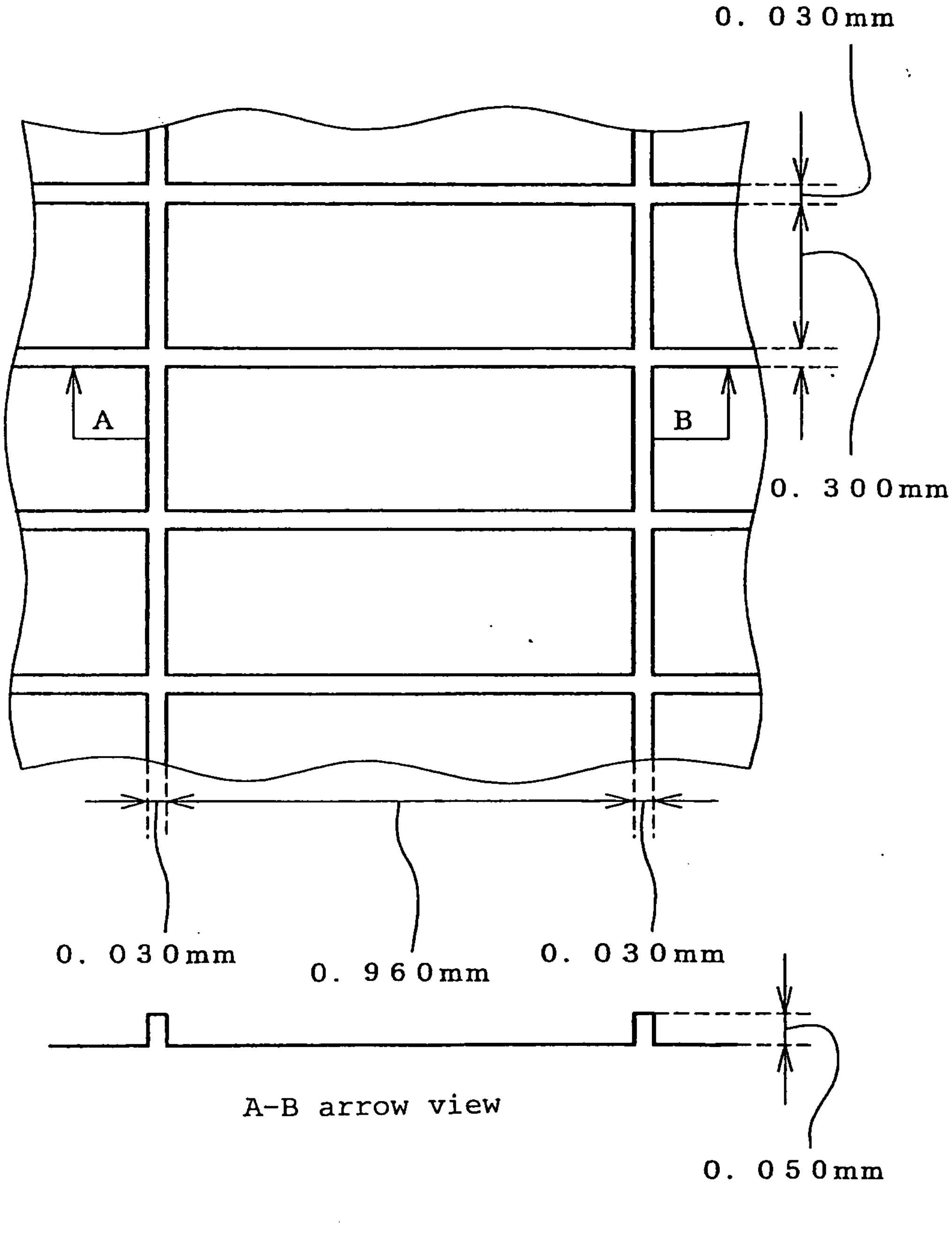

**INTERNATIONAL SEARCH REPORT**

International application No.
PCT/JP2006/307791

A. CLASSIFICATION OF SUBJECT MATTER
***G09F9/00***(2006.01), ***G02F1/1333***(2006.01), ***G02F1/1335***(2006.01), ***H01J11/02***(2006.01)

According to International Patent Classification (IPC) or to both national classification and IPC

B. FIELDS SEARCHED

Minimum documentation searched (classification system followed by classification symbols)
G09F9/00, G02F1/1333, G02F1/1335, H01J11/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-117831 A (Shin-Etsu Polymer Co., Ltd.), 15 April, 2004 (15.04.04), Par. Nos. [0010] to [0015], [0021], [0029], [0039] (Family: none) | 1-11 |
| Y | JP 2003-292926 A (KANEKA Corp.), 15 October, 2003 (15.10.03), Par. Nos. [0002], [0057] (Family: none) | 1-11 |
| Y | JP 4-145188 A (KANEKA Corp.), 19 May, 1992 (19.05.92), Page 2, lines 10 to 19 (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May, 2006 (01.05.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/307791

C (Continuation). DOCUMENTS CONSIDERED TO BE RELEVANT

| Category* | Citation of document, with indication, where appropriate, of the relevant passages | Relevant to claim No. |
|---|---|---|
| A | JP 52-54874 A (Toyo Tire and Rubber Co., Ltd.), 04 May, 1977 (04.05.77), Page 1 (Family: none) | 1-11 |
| A | JP 52-141898 A (Olin Corp.), 26 November, 1977 (26.11.77), Page 3, upper right column, line 17 to lower right column, line 1 & US 4087389 A | 1-11 |
| A | JP 2004-191702 A (Nitto Denko Corp.), 08 July, 2004 (08.07.04), Par. Nos. [0008], [0009] (Family: none) | 1-11 |
| A | JP 10-282335 A (Sumitomo Chemical Co., Ltd.), 23 October, 1998 (23.10.98), Par. No. [0011] (Family: none) | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9259770 A
- JP 11217550 A
- JP 2002260539 A
- JP 2001266759 A
- JP 2003292926 A
- US 3159601 A
- US 3159662 A, Ashby
- US 3220972 A, Lamoreaux
- JP 2005111414 A